# EUROPÄISCHE PATENTANMELDUNG

(11) **EP 2 703 685 A2**
(43) Veröffentlichungstag der Anmeldung: **05.03.2014**
(21) Anmeldenummer: 13180713.3
(22) Anmeldetag: 16.08.2013
(51) Int. Cl.: F16F 9/38, F16F 9/05, F16F 9/04

(54) **Luftfederbalg**

(30) Priorität: 29.08.2012 DE 102012107945
(71) Anmelder: PE Automotive GmbH & Co. KG, 58256 Ennepetal (DE)
(72) Erfinder: Salten, Christian, 58285 Gevelsberg (DE)
(74) Vertreter: Schweiger, Johannes

(57) **Zusammenfassung**

Die Erfindung betrifft einen Luftfederbalg für eine Luftfeder mit
- einem Rollbalg (1)und
- einer an einem Kopfende (1k) des Rollbalgs (1) angeordneten Abschlussplatte (2) mit einer Fahrgestellseite (2o) zum Anschluss des Luftfederbalgs an einem Fahrgestell (20),

**dadurch gekennzeichnet,**
dass auf die Abschlussplatte (2) an der Fahrgestellseite (2o) zumindest in einem Auflagebereich (2a) zum Anschluss des Fahrgestells (20) ein flaches Schutzelement (3) aufgebracht ist.

## Beschreibung

Die Erfindung betrifft einen Luftfederbalg für eine Luftfeder gemäß Anspruch 1 sowie eine Luftfeder gemäß Anspruch 8.

Solche Luftfederbälge sind in besonderem Maße Umwelteinflüssen ausgesetzt. Wegen der langen Laufzeiten von Fahrzeugen bestehen Probleme, den Luftfederbalg bei einer Wartung/Reparatur oder einem sonstigen Austausch zu demontieren. Das Problem kann durch sich festsetzende Verbindungen und/oder Rost und/oder Verkanten der Verbindungselemente entstehen.

Der Erfindung liegt die Aufgabe zu Grunde, den Luftfederbalg bauseits so zu gestalten, dass dieser auch nach langer Laufzeit leichter vom Fahrgestell gelöst werden kann.

Diese Aufgabe wird mit den Merkmalen der Ansprüche 1 und 8 gelöst, wobei vorteilhafte Weiterbildungen der Erfindung in den Unteransprüchen angegeben sind. In den Rahmen der Erfindung fallen auch sämtliche Kombinationen aus zumindest zwei von in der Beschreibung, den Ansprüchen und/oder den Figuren offenbarten Merkmalen. Soweit Wertebereiche angegeben sind, sollen auch innerhalb der genannten Grenzwerte liegende Werte als mitoffenbart gelten.

Der Erfindung liegt dabei der Gedanke zu Grunde, die Abschlussplatte mit einem flachen Schutzelement zu versehen, das ein Festsetzen des Luftfederbalgs am Fahrgestell verringert oder weitgehend verhindert. Das Schutzelement kann sowohl aus einem separat aufgebrachten Gefüge wie einer, insbesondere einseitig klebend ausgebildeten, Folie bestehen, aber auch in Form einer Beschichtung aufgebracht werden. Auch eine Kombination aus beidem ist denkbar. Die Folie wirkt funktional somit als Trennelement und/oder Schutzelement zwischen der Abschlussplatte und dem Fahrgestell, auf dem der Luftfederbalg mittels der Abschlussplatte montiert wird. Das Schutzelement ist dabei so gestaltet, dass es möglichst wenig mechanischen Einfluss auf die Verbindung zwischen der Abschlussplatte und dem Fahrgestell nimmt. Entsprechend ist das erfindungsgemäße Schutzelement so flach ausgebildet, dass die relative Lage der Abschlussplatte zum Fahrgestell praktisch nicht beeinflusst wird, insbesondere deren parallele Ausrichtung zueinander.

Von besonderem Vorteil ist es dabei, wenn das Schutzelement eine, insbesondere über die gesamte Fläche des Schutzelements einheitliche, Dicke D zwischen 0,05 mm und 2 mm, insbesondere zwischen 0,1 mm und 1 mm, vorzugsweise zwischen 0,2 mm und 0,8 mm aufweist.

Indem das Schutzelement formkongruent zu der Fahrgestellseite ausgebildet ist und/oder die Fahrgestellseite an einem Umfangsrand überragt, wird ein verbesserter Schutz der Abschlussplatte gewährleistet und die Montage vereinfacht. Darüber hinaus wird nicht nur der am meisten relevante Teil des Auflagebereichs zwischen dem Fahrgestell und der Abschlussplatte geschützt, sondern weitere Teile, insbesondere die gesamte, am ehesten Umwelteinflüssen ausgesetzte Oberseite der Abschlussplatte. Es können somit weitere Funktionsbereiche, insbesondere eine an der Abschlussplatte angebrachte, insbesondere aufgeklebte, Kennzeichnung des Luftfederbalgs entsprechend geschützt werden.

Soweit das Schutzelement aus einem nicht mit Sauerstoff und Wasser oxidierbaren Material gebildet ist, wird mit Vorteil eine Korrosion des Schutzelements selbst verhindert, was auch zu einem verbesserten Schutz der Abschlussplatte und der Verbindung zwischen der Abschlussplatte und dem Fahrgestell führt.

Weitere Vorteile und zweckmäßige Ausführungen der Erfindung sind in den weiteren Ansprüchen, den Figuren, der Beschreibung und den Zeichnungen wiedergegeben.

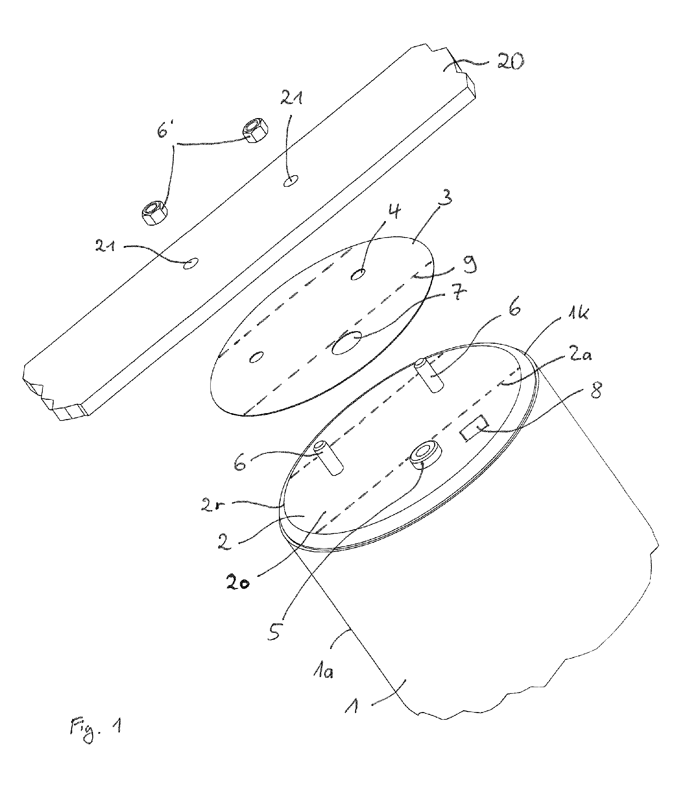

Fig. 1 zeigt eine perspektivische Ansicht eines Ausführungsbeispiels eines erfindungsgemäßen Luftfederbalgs.

In den Figuren sind gleiche Bauteile und Bauteile mit gleicher Funktion mit den gleichen Bezugszeichen gekennzeichnet.

Fig. 1 zeigt einen Luftfederbalg mit einem Rollbalg 1 von dessen Kopfende 1k aus Der Rollbalg 1 erstreckt sich über die dargestellte Außenseite 1a bis zu dessen nicht dargestellten Fußende (gegenüberliegend zum Kopfende 1k) in einer zylinderförmigen Gestalt. Der Rollbalg liegt, wobei dessen Volumen als Luftfeder dient, in entspanntem Zustand mit seinem (nicht dargestellten) Wulst am Fußende an und bei Kompression des im Rollbalg enthaltenen Luftvolumens über eine Luftanschlussöffnung 5 in Richtung des Kopfendes 1k des Rollbalg 1 rollt dieser an einer Außenseite einer nicht dargestellten Tauchglocke ab.

Der Rollbalg 1 wird nach oben von einer Abschlussplatte 2 vollständig verschlossen, wobei die Abschlussplatte 2 an ihrem Umfangsrand 2r mit dem Rollbalg 1 verbunden ist.

Eine ordnungsgemäße Ausrichtung der Abschlussplatte 2 in Bezug auf den Rollbalg 1 ist erforderlich, um an der Abschlussplatte 2 angebrachte Befestigungsmittel 6, 6', die zur Befestigung der Abschlussplatte 2 und somit des Luftfederbalgs an einem Fahrgestell 20 dienen, korrekt zu positionieren.

Auf einer von dem Rollbalg 1 abgewandten Fahrgestellseite 2o der Abschlussplatte 2, die zum Anschluss des Luftfederbalgs an das Fahrgestell 20 dient, wird ein formkongruent zur Fahrgestellseite 2o ausgebildetes Schutzelement 3, hier in Form einer Klebefolie, aufgebracht. Die Aufbringung erfolgt möglichst blasenfrei, damit sowohl während der Lagerzeit des Luftfederbalgs als auch während der Standzeit des Luftfederbalgs kein Ablösen des Schutzelements 3 von der Abschlussplatte 2 erfolgt.

Das Schutzelement 3 weist zwei Durchgangsöffnungen 4 auf, die beim Aufbringen des Schutzelements 3 auf die Abschlussplatte 2 über die Befestigungsmittel (Gewindestangen 6) geführt werden. Daneben weist das Schutzelement 3 eine weitere Durchgangsöffnung 7 auf, die zum Durchtritt der aus der Abschlussplatte 2 hervortretenden Luftanschlussöffnung 5 dient. Somit wird das Schutzelement 3 bei der Aufbringung auch automatisch gegenüber der Fahrgestellseite 2o ausgerichtet. Bevorzugt ist das Schutzelement 3 vollflächig auf der Fahrgestellseite 2o aufgebracht, damit die Fahrgestellseite 2o und nicht nur ein Auflagebereich 2a zum Anschluss des Fahrgestells 20 von dem Schutzelement 3 abgedeckt wird.

Auf diese Weise kann von dem Schutzelement 3 auch eine auf der Fahrgestellseite 2o aufgebrachte Kennzeichnung 8 geschützt werden, so dass diese bis zu einem Austausch des Luftfederbalgs erkennbar ist und somit der Luftfederbalg leichter identifizierbar ist. Beispielsweise kann dort eine Bestellnummer aufgebracht sein, um der Werkstatt beim Austausch des Luftfederbalgs die Arbeit zu erleichtern und den Einbau eines falschen Luftfederbalgs zu vermeiden.

Darüber hinaus kann durch das Schutzelement, insbesondere durch Anbringung von Ausrichtungshilfslinien 9 eine exaktere Ausrichtung des Luftfederbalgs 1 gegenüber dem Fahrgestell 20 erreicht werden, damit auch ein Verkanten vermieden werden kann. Durch das leichtere Ablösen des Luftfederbalgs beim Wechsel werden außerdem Beschädigungen am Fahrgestell 20, insbesondere an Durchgangsöffnungen 21 des Fahrgestells, vermieden.

### Bezugszeichenliste

- 1: Rollbalg
- 1a: Außenseite
- 1k: Kopfende
- 2: Abschlussplatte
- 2a: Auflagebereich
- 2o: Fahrgestellseite
- 2r: Umfangsrand
- 3: Schutzelement
- 4: Durchgangsöffnungen
- 5: Luftanschlussöffnung
- 6, 6': Befestigungsmittel
- 7: Durchgangsöffnung
- 8: Kennzeichnung
- 9: Ausrichtungshilfslinien
- 20: Fahrgestell
- 21: Durchgangsöffnungen

## Patentansprüche

1. Luftfederbalg für eine Luftfeder mit
- einem Rollbalg (1) und
- einer an einem Kopfende (1k) des Rollbalgs (1) angeordneten Abschlussplatte (2) mit einer Fahrgestellseite (2o) zum Anschluss des Luftfederbalgs an einem Fahrgestell (20),
**dadurch gekennzeichnet,**
**dass** auf die Abschlussplatte (2) an der Fahrgestellseite (2o) zumindest in einem Auflagebereich (2a) zum Anschluss des Fahrgestells (20) ein flaches Schutzelement (3) aufgebracht ist.

2. Luftfederbalg nach Anspruch 1,
**dadurch gekennzeichnet,**
**dass** das Schutzelement (3) eine, insbesondere aufgeklebte, Folie ist.

3. Luftfederbalg nach Anspruch 1 oder 2,
**dadurch gekennzeichnet,**
**dass** das Schutzelement (3) eine Dicke D zwischen 0,05 mm und 2 mm, insbesondere zwischen 0,1 mm und 1 mm, vorzugsweise zwischen 0,2 mm und 0,8 mm aufweist.

4. Luftfederbalg nach einem der vorhergehenden Ansprüche,
**dadurch gekennzeichnet,**
**dass** das Schutzelement (3) formkongruent zu der Fahrgestellseite (2o) ausgebildet ist.

5. Luftfederbalg nach einem der vorhergehenden Ansprüche,
**dadurch gekennzeichnet,**
**dass** das Schutzelement (3) aus einem nicht mit Sauerstoff und Wasser oxidierbaren Material gebildet ist.

6. Luftfederbalg nach einem der vorhergehenden Ansprüche,
**dadurch gekennzeichnet,**
**dass** das Schutzelement (3) mindestens zwei Durchgangsöffnungen (4) zum Durchtritt von an der Fahrgestellseite (2o) angeordneten Funktionselementen des Luftfederbalgs aufweist.

7. Luftfederbalg nach einem der vorhergehenden Ansprüche,
**dadurch gekennzeichnet,**
**dass** das Schutzelement (3) die Fahrgestellseite (2o) an einem Umfangsrand (2r) überragt.

8. Luftfeder für Luftfederachsen mit einem Luftfederbalg nach einem der vorhergehenden Ansprüche.
